# EUROPEAN PATENT APPLICATION

(11) **EP 0 833 543 A2**
(43) Date of publication of application: **01.04.1998**
(21) Application number: 97307637.5
(22) Date of filing: 29.09.1997
(51) Int. Cl.: H04Q 11/04, H04L 12/46

(54) **Network interface**

(30) Priority: 27.09.1996 GB 9620194
(71) Applicant: Mycom Media Limited, Horsham, West Sussex RH13 5PJ (GB)
(72) Inventor: Majdnia, Alireza, London W9 1EZ (GB)
(74) Representative: Gill, David Alan

(57) **Abstract**

The present invention provides for a network interface (10) arranged for connecting a host computer (12) to an asynchronous transfer mode network and comprising an asynchronous transfer mode facility (18), a video compression/decompression facility and bus means (22) arranged for providing a communication path between the asynchronous transfer mode facility (18) and the video compression/decompression facility and arranged to provide isolation from the primary bus of the host computer. The interface (10) of the present invention is advantageous in that it allows for a readily connectable interface card or interface integrated circuit, which can be incorporated into a network terminal such as a personal computer terminal of a LAN.

## Description

The present invention relates to a network interface and in particular, but not exclusively, to a network interface for a personal computer.

In many environments, computer terminals, for example personal computer terminals, are connected as part of a network, and quite often a local area network (LAN), for the ready distribution, reception and use of data. Increasingly, as multimedia applications proliferate, information over and above mere computer data is required to be displayed, or otherwise processed, at such terminals. In this manner, the LAN to which each computer terminal is connected needs to be arranged to adequately carry video/audio data and, currently, separate aspects within the network are provided to meet this requirement.

However, such arrangements are somewhat unnecessarily complex and so the present invention seeks to provide for a network interface which allows for the ready communication of computer data and audio/video data in a relatively simple and readily adaptable manner.

According to the present invention there is provided a network interface arranged for connecting a host computer to an asynchronous transfer mode network and comprising an asynchronous transfer mode facility, a video compression/decompression facility and bus means arranged for providing a communication path between said asynchronous transfer mode facility and said video compression/decompression facility and arranged to provide isolation from the primary bus of the host computer.

The interface of the present invention is advantageous in that it can provide for a readily connectable interface card, or interface integrated circuit, which can be incorporated into a network terminal such as a personal computer terminal of a LAN.

Advantageously, audio/video data packets are arranged to be transferred between the asynchronous transfer mode (ATM) facility and the compression/decompression facility by way of said bus means.

The ATM facility is advantageously arranged with segmentation and reassembly means which can preferably be provided to function in accordance with any one of the four classes A-D of the ATM adaption layer protocols AAL1, AAL3/4 or AAL5 depending on the level of mapping required between the ATM layer and the next higher layer of the data.

The ATM facility preferably also includes a physical connection layer such as a fibre distributed data interface physical layer (FDDI(phy)) and the connection from the ATM facility to the network can thus be provided through a UTP or optical connection.

Preferably, local memory means is provided with an interface for incoming/outgoing sell streams for the segmentation and reassembly function and, in particular, the compression/decompression facility is advantageously provided with a frame memory which can also serve as the aforementioned local memory for the segmentation and reassembly cell streams.

The compression/decompression facility is advantageously extensible to cover one of a variety of video processing standards such as, for example, M-JPG, MPEG-1, H.320 and H.324 INDEO.

As will be appreciated, analogue video/audio data is input, and output, via the compression/decompression facility and the audio data received by the interface from the network is arranged to be delivered to a sound card located within the host computer, whereas the video data is arranged to be transferred to a frame buffer within the host computer.

A particularly advantageous feature of the present invention is the provision of the bus means on the interface which can advantageously be arranged, in combination with a bridge connector, to achieve appropriate isolation from the primary bus, i.e. the PCI bus, of the host computer.

While the combination of the bus means and the bridge device achieves the aforementioned isolation in that it isolates the high-bandwidth traffic appearing at the interface from the host computer PCI bus, the bridge device is nevertheless advantageously arranged to allow for the aforementioned transfer of incoming audio data to the sound card of the host computer and incoming screen video data to the frame buffer of the host computer.

Thus, the bridge device can comprises a PCI bridge device for which the bus means is advantageously dedicated.

According to a further advantageous feature of the present invention, the interface can be provided with a local processor that can advantageously be in the form of an embedded processor which can be employed particularly where higher level software implementations are required, for example LAN emulation. Then, the use of the interface of the present invention does not have a disadvantageous operational effect on the main processor of the host computer. The processing capability of the processor of the host computer is therefore tied to the operational requirements of the interface.

The local processor which can therefore advantageously be provided integrally with the interface, can therefore serve to control communication with the ATM facility via the bus means.

As mentioned above, the present invention is particularly advantageous in that common processing of multimedia data can be achieved over a network connected to a plurality of terminals and the interface can either be in a form of a card or an integrated circuit.

According to a particular advantage, the interface can be in the form of a plug-in card which thus inherently highlights particularly advantageous aspects of the invention.

Thus, the present invention can overcome disadvantages found in currently known network systems by providing an ATM interface card/circuit with integral audio/video compression/decompression circuitry.

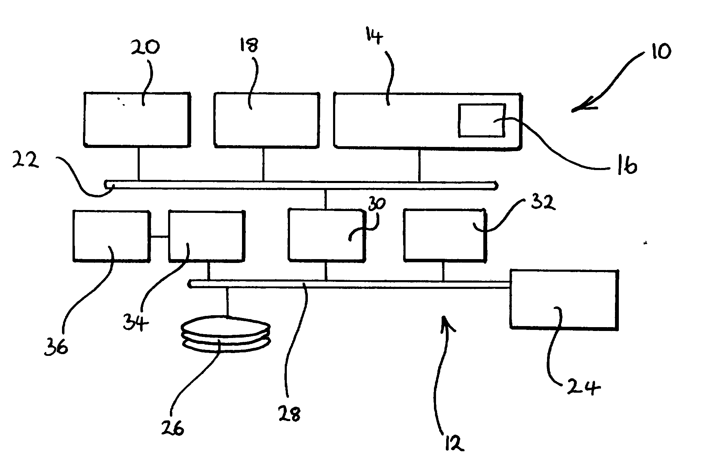

The invention is now described further hereinafter, by way of example only, with reference to the accompanying drawing which comprises a block diagram of an interface arrangement embodying the present invention and associated with a host computer.

In the drawing, a plug-in asynchronous transfer mode network interface card 10 is shown in combination with elements of a host computer 12. The interface card includes an audio/video compression/decompression means which is arranged for the input and output of analogue video/audio data and which includes a frame memory 16 for frame buffering purposes.

The interface card 10 further includes an asynchronous transfer mode element 18 being arranged for appropriate connection to, for example, a UTP or optical connection and which further affords the interface card the segmentation and reassembly function required for operation in accordance with ATM protocols.

An embedded processor 20 is also provided on the interface card and can be utilised for the control of all data transfer within the card and also when higher level software implementation such as LAN emulation is required. The embedded processor 20 advantageously limits the effect that the interface card 10 has on the processor of the host computer 12.

A particular feature of the present invention is a secondary bus 22 which is provided on the interface card and which is advantageously arranged for the transfer of local processor control information and data between the local processor 20 and the ATM element 18. The secondary bus 22 is also arranged for the transfer of audio/video packets between the ATM element 18 and the audio/video compression/decompression means 14. Also, audio bit stream data and screen video data emanating from the audio/video compression/decompression means which is to be transferred to the host computer is delivered from the interface card by way of the secondary bus 22.

As can be seen, the host computer 12 includes a host processor memory 24, disc drive arrangement 26 and a primary PCI bus 28 which connects the disc drive arrangement 26 with the host processor memory 24.

A PCI bridge device 30 is advantageously provided for achieving the appropriate degree of isolation between the secondary bus 22 of the interface card and the primary bus 28 of the host computer 12. The PCI bridge device 30 therefore dictates that the secondary bus can comprise the dedicated secondary bus for the interface card and this advantageously serves to minimise the bandwidth/latency constraints imposed on the host system. The host computer further includes a sound card 32, a graphics adaptor 34 and a frame buffer memory 36 and connection between the sound card and the audio/video compression/decompression means 14, i.e. for the transfer of audio bit stream data, and connection between the graphics adaptor 34 and the audio/video compression/decompression means 14, i.e. for the transfer of audio bit stream data to the sound card 32 associated with the host computer 12 is achieved via the bridge device 30 and the secondary bus 22.

As will be appreciated, the present invention advantageously provides for a hardware solution to problems arising in the transfer of multi-media data and advantageously combines ATM high-speed network technology with MPEG video decompression techniques so as to advantageously allow for the transfer of video and data together over a network and in a manner of which does not place any disadvantageous restrictions or requirements on each host terminal of the network.

As mentioned, the invention can advantageously provide in the form of a plug-in card adapted for a particular personal computer terminal on the network and which has the appropriate control software loaded thereon.

The present invention is not restricted to the details of the foregoing embodiment. For example, the interface card can be provided without the local processor and so that the appropriate processing requirements can then be met by way of the host processor.

## Claims

1. A network interface arranged for connecting a host computer (12) to an asynchronous transfer mode network and comprising an asynchronous transfer mode facility (18), a video compression/decompression facility (14) and bus means (22) arranged for providing a communication path between said asynchronous transfer mode facility (18) and said video compression/decompression facility (14) and arranged to provide isolation from the primary bus (28) of the host computer (12).

2. An interface as claimed in Claim 1, wherein audio/video data packets are arranged to be transferred between the asynchronous transfer mode (ATM) facility (18) and the compression/decompression facility (14) by way of the bus means (22).

3. An interface as claimed in Claim 2, wherein local memory means is provided with an interface for incoming/outgoing sell streams for the segmentation and reassembly function and the compression/decompression facility (14) is provided with a frame memory (16) which comprises the aforementioned local memory for the segmentation and reassembly cell streams.

4. An interface as claimed in Claim 1, 2 or 3, wherein the asynchronous transfer facility (18) is arranged with segmentation and reassembly means provided to function in accordance with any one of the four classes A-D of the ATM adaption layer protocols AAL1, AAL3/4 or AAL5 depending on the level of mapping required between the ATM layer and the next higher layer of the data.

5. An interface as claimed in Claim 1, 2, 3 or 4, wherein the asynchronous transfer facility (18) also includes a physical connection layer.

6. An interface as claimed in Claim 5, wherein the physical connection layer comprises a fibre distributed data interface physical layer (FDDI(phy)) and the connection from the ATM facility to the network is provided through an optical connection.

7. An interface as claimed in any one of Claims 1-6, wherein the compression/decompression facility (14) is extensible to cover one of a variety of video processing standards.

8. An interface as claimed in any one of Claims 1-7, wherein the bus means (22) is arranged, in combination with a bridge connector (30), to achieve appropriate isolation from a primary bus (28) of the host computer (12).

9. An interface as claimed in Claim 8, wherein the bridge connector (30) is arranged to allow for the aforementioned transfer of incoming audio data to a sound card (32) of the host computer (12) and incoming screen video data to the frame buffer (36) of the host computer (12).

10. An interface as claimed in Claim 9, wherein the bridge connector (30) comprises a PCI bridge device for which the bus means (22) is advantageously dedicated.

11. An interface as claimed in Claims 1-10, and provided with a local processor in the form of an embedded processor (20).

12. An interface as claimed in Claim 11, wherein the local processor is provided integrally with the interface and serves to control communication with the ATM facility via the bus means (22).

13. An interface as claimed in any one of Claims 1-12, and in the form of a plug-in card.
